# EUROPEAN PATENT SPECIFICATION

(11) **EP 2 076 365 B1**
(45) Date of publication and mention of the grant of the patent: **09.12.2009**
(21) Application number: 07808931.5
(22) Date of filing: 07.09.2007
(51) Int. Cl.: B25J 15/10

(54) **GRIPPER WITH THREE JAWS FORMING TWO CLAMPS AND GRIPPER WITH TWO JAWS AND A TUCKER**
GREIFER MIT DREI ZWEI KLEMMEN BILDENDEN BACKEN UND GREIFER MIT ZWEI BACKEN UND EINEM FALZSCHWERT
PRÉHENSEUR DOTÉ DE TROIS MÂCHOIRES FORMANT DEUX PINCES ET PRÉHENSEUR DOTÉ DE DEUX MÂCHOIRES ET UNE LAME DE PLIAGE

(30) Priority: 08.09.2006 EP 06120406
(43) Date of publication of application: 08.07.2009
(73) Proprietor: Oerlikon Assembly Equipment Pte. Ltd., Singapore 117528 (SG)
(72) Inventor: WANG, Honggang, Singapore 120510 (SG); WANG, Yaoming, Singapore 680434 (SG); YU, Feng, Singapore 650392 (SG); ROSENZWEIG, Eran, St Tenafly, New Jersey 07670 (US)
(74) Representative: Falk, Urs
(86) International application number: PCT/SG2007/000302
(87) International publication number: WO 2008/030200

(56) References cited:
- EP-A- 0 287 786
- DE-B3-102004 022 201
- JP-A- 2001 313 299

## Description

### Technical Field

The invention concerns a gripper designed for either pulling a strip of material out from a first magazine and for transporting the strip along a predetermined direction either for transporting a strip along a predetermined direction and pushing the strip into a second magazine.

### Background of the invention

On wireing semiconductor chips to a substrate on a wire bonder one substrate after the other is taken out from an input magazine, transported along a predetermined direction to a wire bonding station where the wire bonds are made and then transported to an output magazine. The transport system comprises a number of different elements for performing the different tasks, namely a pull mechanism, a movable gripper and a push mechanism. The pull mechanism pulls the substrate out of an input magazine and presents it to the gripper. The gripper transports the substrate first to the wire bonding station and then passes it to the push mechanism. The push mechanism pushes the substrate into an output magazine.

### Short description of the invention

The object of the invention is to develop a transport system providing high functionality at low costs.

The transport system according to the invention comprises two grippers wherein the first gripper includes a pull mechanism and wherein the second gripper includes a push mechanism. The first gripper is a puller gripper adapted to pull the strip out of the input magazine and transport it to the bonding area of the wire bonder. The second gripper is an ejector gripper adapted to transport the strip from the bonding area to the output magazine and to push it into the output magazine. The first gripper comprises a first lever having a first jaw attached to a front end of the first lever, a second lever having a second jaw attached to a front end of the second lever, a third lever having a third jaw attached to a front end of the third lever, wherein the first jaw and the second jaw form a first clamp and wherein the first jaw and the third jaw form a second clamp, a motor, and means for transforming a rotation of the motor into rotations of the three levers such that in a first position of the motor both clamps are open, that in a second position of the motor the first clamp is closed and the second clamp is open and that in a third position of the motor the first clamp is open and the second clamp is closed. The second gripper comprises a first lever having a first jaw attached to a front end of the first lever, a second lever having a tucker attached to a front end of the second lever, a third lever having a second jaw attached to a front end of the third lever, wherein the first jaw and the second jaw form a clamp, a motor, and means for transforming a rotation of the motor into rotations of the three levers such that in a first position of the motor the clamp is open and the tucker in a raised position, that in a second position of the motor the clamp is closed and the tucker in a raised position and that in a third position of the motor the clamp is open and the tucker in a lowered position.

### Short description of the figures

The accompanying drawings, which are incorporated into and constitute a part of this specification, illustrate one or more embodiments of the present invention and, together with the detailed description, serve to explain the principles and implementations of the invention. The figures are not to scale. In the drawings:
- Fig. 1: shows a transport system comprising two grippers in accordance with the invention,
- Figs. 2, 3: show a first embodiment of a gripper according to the invention,
- Figs. 4, 5: show details of the gripper, and
- Fig. 6: shows a second embodiment of a gripper according to the invention

### Detailed description of the invention

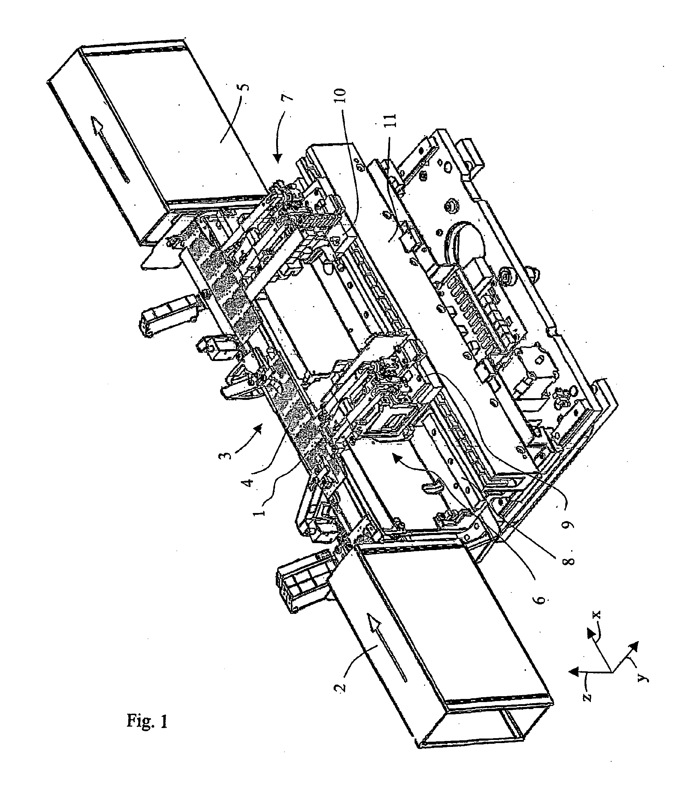

Fig. 1 shows a part of a wire bonder. The directions of a Cartesian coordinate system are designated with x, y and z. The wire bonder comprises a transport system for taking a strip 1 out of a first or input magazine 2, transporting it to a bonding area 3 of a bonding station (not shown) where the semiconductor chips 4 attached to the strip 1 are wired with the strip 1 and for transporting the strip 1 to a second or output magazine 5. The transport system comprises two grippers 6 and 7 bearing on a guide rail 8 that runs in the x-direction. Each of the grippers 6, 7 contains an electrical coil 9 or 10 protruding into a stationary arranged stator 11. The coil 9 and the stator 11 form a first linear motor and the coil 10 and the stator 11 form a second linear motor.

The first gripper 6 is capable of performing two functions, namely to pull out the strip 1 from the input magazine 2 and to transport the strip 1 to the bonding area 3. It is therefore called puller gripper. The second gripper 7 is also capable of performing two functions, namely to transport the strip 1 from the bonding area 3 till the output magazine 5 (so that the strip 1 is in front of the magazine 5) and to push or eject the strip 1 into the output magazine 5. It is therefore called an ejector gripper. Each gripper comprises a clamp for clamping the strip 1 during the transport. The puller gripper 6 comprises three jaws, the ejector gripper 7 comprises two jaws and an ejector. However, both grippers 6, 7 comprise the same mechanism for actuating the three jaws or the two jaws and the ejector, respectively. A control unit (not shown) controls the movements and operation of each gripper.

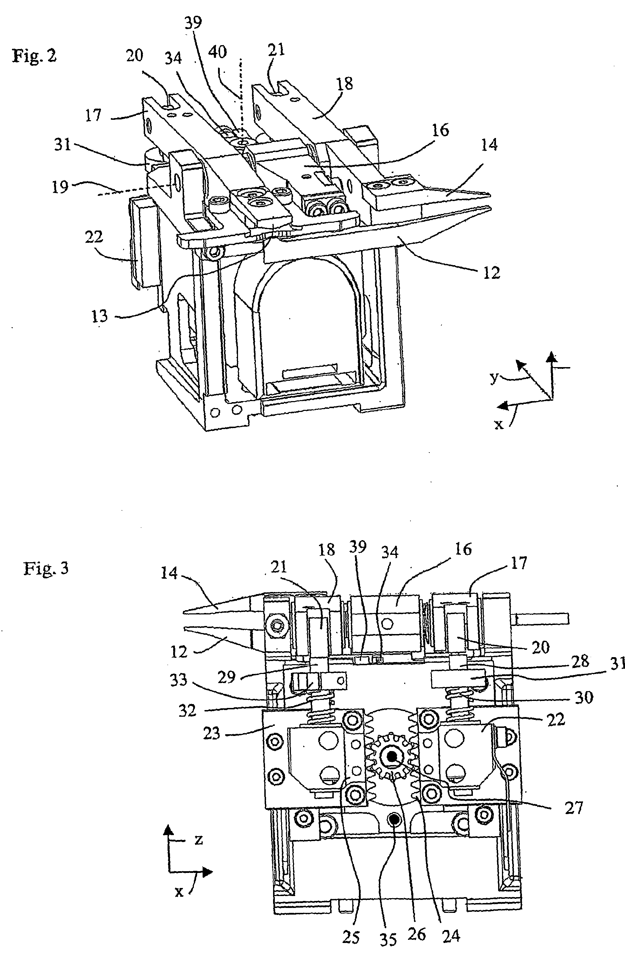

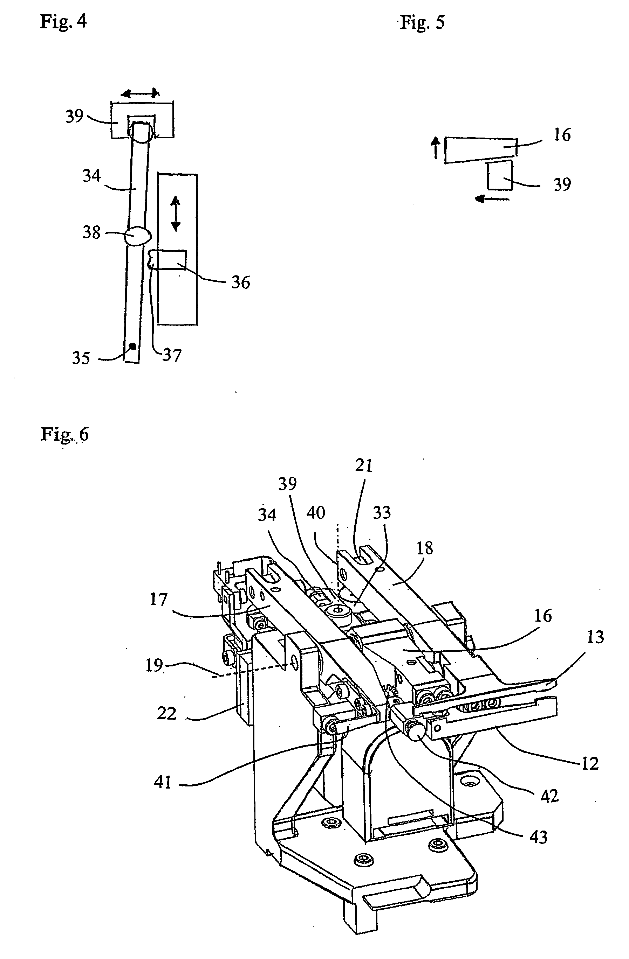

A gripper according to a first embodiment of the invention, namely a gripper for use as puller gripper, is now illustrated in detail with the aid of figs. 2 to 5. Fig. 2 shows a perspective front view of the gripper. Fig. 3 shows a schematic plan view of the backside of the gripper. Figs. 4 and 5 show details of the mechanism for actuating the first jaw 12. While most parts of the gripper are visible in figs. 2 and 3, some parts are only visible in figs. 4 and 5. The gripper comprises three jaws 12, 13 and 14. The first jaw 12 is a long jaw that lies opposite to both the second jaw 13 and the third jaw 14. The first jaw 12 and the second jaw 13 form a first clamp for clamping the strip 1 during the transport phases. The first jaw 12 and the third jaw 14 form a second clamp for pulling the strip 1 out of the input magazine 2 (Fig.
1). Each of the three jaws 12 to 14 may take one of two positions, either a lowered position or a raised position. The gripper may then take three different states as follows:
   - State 1:: The first jaw 12 is in a lowered position, the second jaw 13 and the third jaw 14 are in a raised position. In this state the gripper can move back and forth between the input magazine 2 and the bonding area 3 without touching the strip 1.
   - State 2:: The first jaw 12 is in a raised position, the second jaw 13 is in a lowered position and the third jaw 14 is in the raised position. The first clamp therefore clamps the strip 1 if present. The second clamp is open and would not clamp the strip 1 if present.
   - State 3:: The first jaw 12 is in the raised position, the second jaw 13 is in the raised position and the third jaw 14 is in the lowered position. The first clamp is open and would not clamp the strip 1 if present. The second clamp is closed and clamps the strip 1.

In state 1 both clamps are open. The gripper works in a complementary fashion in that in states 2 and 3 one clamp is closed while the other clamp is open. According to the invention the gripper comprises only one drive for changing between the three states: The gripper comprises a single motor, preferably a stepper motor, and means for transforming the rotation of the motor into up and down movements of the jaws 12, 13 and 14. In a preferred embodiment these means consist of
- three levers 16, 17 and 18 that bear on a common rotary axis 19 running in the x-direction, wherein the first jaw 12 is attached to a front end of the first lever 16, the second jaw 13 is attached to a front end of the second lever 17 and the third jaw 14 is attached to a front end of the third lever 18, each lever pretensioned by a spring, so that in an unloaded state of the levers 16 to 18 the first clamp formed between the first and second jaw 12, 13 and the second clamp formed between the first and third jaw 12, 14 are open and do not clamp,
- first coupling means 20 bearing in the rear end of the second lever 17 and second coupling means 21 bearing in the rear end of the third lever 18,
- two shuttles 22 and 23 movably bearing on guide rails running in the z-direction,
- a first toothed rack 24 attached to the first shuttle 22 and a second toothed rack 25 attached to the second shuttle 23,
- a toothed wheel 26 bearing on an axis 27 running in the y-direction, the teeth of the toothed wheel 26 engaging the teeth of the toothed racks 24 and 25, the toothed wheel 26 driven directly or via a gear by the motor,
- a first rod 28 displaceably bearing in the first shuttle 22 and protruding towards the first coupling means 20, and a second rod 29 displaceably bearing in the second shuttle 23 and protruding towards the second coupling means 21,
- a first spring 30 put over the first rod 28 and compressed between the first shuttle 22 and a first stop means 31 fixed to the first rod 28 so that the first spring 30 is pretensioned, and a second spring 32 put over the second rod 29 and compressed between the second shuttle 23 and a second stop means 33 fixed to the second rod 29 so that the second spring 32 is pretensioned,
- a fourth lever 34 rotatably bearing on an axis 35 running in the y-direction and having a small wheel 38,
- a plate 36 (see fig. 4) attached to the first shuttle 22, the plate 36 having a nose 37 that interacts with the small wheel 38 of the fourth lever 34 in such a way that it makes the fourth lever 34 move in the x-direction when the nose 37 of the plate 36 passes the small wheel 38, and
- a fifth lever 39 (see again fig. 2) bearing on an axis 40 running in the z-direction, wherein a first end of the fifth lever 39 is coupled to the second end of the fourth lever 34 and the second end of the fifth lever 39 is coupled to the rear end of the first lever 16. The second end of the fifth lever 39 and the rear end of the first lever 16 are wedge-shaped (see fig. 5), i.e. they have surfaces opposing it other that run obliquely with respect to the x-direction, in order to transform the movement of the second end of the fifth lever 39 directed in the x-direction into a movement of the front end of the first lever 16 directed in the z-direction. So the back and forth movement of the fourth lever 34 finally results in an up and down movement of the first jaw 12.

The operation and actuation of the three jaws 12, 13 and 14 of the gripper is described in the following. The gripper may change back and forth between its three states mentioned above in a predetermined sequence, namely in the sequence state 2 - state 1 - state 3 by turning the motor. Let's assume that the gripper is in state 2, i.e. the jaws 12 and 13 forming the first clamp clamp a strip 1. The motor is in a first position and the toothed wheel 26 is in a first position. The first shuttle 22 is in an upper position and the first rod 28 presses against the first coupling means 20 bearing in the rear end of the second lever 17 with a certain force. This leads to the first rod 28 being displaced relative to the first shuttle 22 in a direction pointing away from the rear end of the second lever 17. The force is given by the position of the first shuttle 22, the degree of this displacement of the first rod 28 and the spring constant. The front end of the second lever 17 is therefore in its lowered position. The second shuttle 23 is in a lower position and the second rod 29 does not touch the second coupling means 21 bearing in the rear end of the third lever 18. The third lever 18 is therefore unloaded and its jaw 14 in the raised position. The nose 37 of the plate 36 attached to the first shuttle 22 is located above the small wheel 38 and does not act on the small wheel 38. The movable end of the fourth lever 34 is at a first position on the right side (when looked at it from the backside of the gripper). The rear end of the fifth lever 39 is also on the right side, the front end of the fifth lever 39 is on the left side so that the rear end of the first lever 16 is in a lower position. Therefore the front end of the first lever 16 is in its raised position. As the front end of the first lever 16 with the first jaw 12 is in its raised position and the front end of the second lever 17 with the second jaw 13 is in its lowered position the two jaws 12 and 13 clamp the strip 1. Because the front end of the third lever 18 with the third jaw 14 is in its raised position, the two jaws 12 and 14 would not clamp the strip 1 if it were present.

For changing from state 2 to state 1 the motor is turned in the clockwise direction to a second position. While the motor turns the first shuttle 22 moves downwards in the negative z-direction and the second shuttle 23 moves simultaneously upwards in the positive z-direction. When the motor has arrived at the second position the first shuttle 22 and the second shuttle 23 are both in a position in which neither the first rod 28 nor the second rod 29 touches the first respective second coupling means 20 or 21. The front end of the second lever 17 and the front end of the third lever 18 are therefore both in their raised position. So the movement of the first shuttle 22 made the second lever 17 pivot around the rotary axis 19 so that the first jaw 12 moved into its raised position. When the motor has arrived at its second position, the nose 37 of the plate 36 acts on the small wheel 38 of the fourth lever 34 so that the end of the fourth lever 34 is at a second position on the left side (as shown in fig. 3). While this end of the fourth lever 34 moved from the first position on the right side to the second position on the left side, the fifth lever 39 pivoted on the axis 40 and made the first lever 16 pivot on the axis 19 so that the first jaw 12 finally arrived at its lowered position. The gripper is now in state 1 in which the first jaw 12 is at its lowered position and the second jaw 13 and the third jaw 14 are both in their raised position. Therefore both clamps do not clamp the strip 1.

For changing from state 1 to state 3 the motor is further turned in the clockwise direction to a third position. While the motor turns the first shuttle 22 moves again downwards in the negative z-direction and the second shuttle 23 moves simultaneously upwards in the positive z-direction. When the motor has arrived at its second position, the first rod 28 does not touch the first coupling means 20 bearing in the rear end of the second lever 17 but the second rod 29 presses against the second coupling means 21 bearing in the rear end of the third lever 18. The nose 37 of the plate 36 is below the small wheel 38 of the fourth lever 34 so that the end of the fourth lever 34 is again at the first position on the right side. From this it follows that the first jaw 12 is now in its raised position, the second jaw 13 is in its raised position and the third jaw 14 is in its lowered position. Therefore the first clamp formed between the first jaw 12 and the second jaw 13 does not clamp the strip 1 and the second clamp formed between the first jaw 12 and the third jaw 14 clamps the strip 1.

Fig. 6 shows a second embodiment of a gripper according to the invention that is used for transporting the strip 1 from the bonding area 3 (fig. 1) to the output magazine 5 and pushing the strip 1 into the output magazine 5. It is therefore called an ejector gripper. The construction of the ejector gripper is essentially the same as the construction of the puller gripper, but has some differences that are explained in the following. The gripper has only one clamp formed by the two jaws 12 and 13. Here the second jaw 13 is attached to the front end of the third lever 18. The length of the first jaw 12 is shorter than with the first embodiment of the puller gripper so that it lies only opposite the second jaw 13. Thus the first jaw 12 and the second jaw 13 form a clamp for transporting the strip 1. A tucker 41 is attached to the front end of the second lever 17. When the front end of the second lever 17 is in its raised position then the tucker 41 is at a distance above the strip 1 and does not touch the strip 1. When the front end of the second lever 17 is in its lowered position then the tucker 41 faces the edge of the strip 1 so that it may push the strip 1 into the output magazine 5. In operation the ejector gripper first clamps the strip 1 with its jaws 12 and 13 and moves it from the bonding area to the output magazine 5. Then it opens the jaws 12 and 13, moves back a predetermined distance, lowers the tucker 41 and pushes the strip 1 into the output magazine 5.

The ejector gripper further comprises a jam detector mechanism. Unfortunately, it often happens that a substrate catches or jams on some part of the output magazine 5 before it has reached its final position in the magazine 5. In doing so, the substrate can be damaged or even destroyed especially when it is relatively thin. In order to prevent this the ejector gripper comprises a jam detector mechanism. The jam detector mechanism consists of a roller 42 placed adjacent the first jaw 12 on the side pointing towards the tucker 41. The second jaw 13 is so long that it lies opposite to the first jaw 12 as well as opposite to the roller 42. When the two jaws 12 and 13 clamp the strip 1, the second jaw 13 also presses the strip 1 against the roller 42. During transport of the strip 1 under normal conditions, the roller 42 does not rotate. But as soon as the strip 1 catches somewhere, the strip 1 stops while the gripper and with it the second jaw 13 still move. This causes the roller 42 to rotate. The rotation of the roller 42 is detected by a sensor consisting of a toothed wheel 43 coupled to the roller 42 and a light barrier. When the roller 42 rotates the teeth of the toothed wheel 43 open and close the light barrier periodically. Upon detection of a rotation of the roller 42 the movement of the gripper is immediately stopped and/or the jaws 12 and 13 are opened.

While embodiments and applications of this invention have been shown and described, it would be apparent to those skilled in the art having the benefit of this disclosure that many more modifications than mentioned above are possible without departing from the scope of the claims.

## Claims

1. Gripper, comprising:
a first lever (16) having a first jaw (12) attached to a front end of the first lever (16),
a second lever (17) having a second jaw (13) attached to a front end of the second lever (17),
a third lever (18) having a third jaw (14) attached to a front end of the third lever (18), wherein the first jaw (12) and the second jaw (13) form a first clamp and wherein the first jaw (12) and the third jaw (14) form a second clamp,
a motor, and
means for transforming a rotation of the motor into rotations of the three levers (16, 17, 18) such that in a first position of the motor both clamps are open, that in a second position of the motor the first clamp is closed and the second clamp is open and that in a third position of the motor the first clamp is open and the second clamp is closed.

2. Gripper, comprising:
a first lever (16) having a first jaw (12) attached to a front end of the first lever (16),
a second lever (17) having a tucker (41) attached to a front end of the second lever (17),
a third lever (18) having a second jaw (14) attached to a front end of the third lever (18), wherein the first jaw (12) and the second jaw (14) form a clamp,
a motor, and
means for transforming a rotation of the motor into rotations of the three levers (16, 17, 18) such that in a first position of the motor the clamp is open and the tucker (41) in a raised position, that in a second position of the motor the clamp is closed and the tucker (41) in a raised position and that in a third position of the motor the clamp is open and the tucker (41) in a lowered position.

3. Gripper according to claim 1 or 2, further comprising:
a first coupling means (20) attached to a rear end of the second lever (17),
a second coupling means (21) attached to a rear end of the third lever (18)
a first shuttle (22) having a first toothed rack (24),
a second shuttle (23) having a second toothed rack (25) movably bearing on guide rails running in the z-direction,
a toothed wheel (26) driven by the motor, the teeth of the toothed wheel (26) engaging the teeth of the toothed racks (24, 25),
a first rod (28) displaceably bearing in the first shuttle (22) and protruding towards the first coupling means (20), and a second rod (29) displaceably bearing in the second shuttle (23) and protruding towards the second coupling means (21),
a first spring (30) put over the first rod (28) and compressed between the first shuttle (22) and a first stop means (31) fixed to the first rod (28) so that the first spring (30) is pretensioned, and a second spring (32) put over the second rod (29) and compressed between the second shuttle (23) and a second stop means (33) fixed to the second rod (29) so that the second spring (32) is pretensioned, wherein
in the second position of the motor the first rod (28) presses against the first coupling means (20) while the second rod (29) does not touch the second coupling means (21), and wherein
in the third position of the motor the first rod (28) does not touch the first coupling means (20) while the second rod (29) presses against the second coupling means (21).

4. Gripper according to claim 3, further comprising:
a fourth lever (34),
a fifth lever (39), wherein a first end of the fifth lever (39) is coupled to an end of the fourth lever (34) and a second end of the fifth lever (39) is coupled to the rear end of the first lever (16), wherein the second end of the fifth lever (39) and the rear end of the first lever (16) have opposing surfaces that are wedge-shaped, and
a plate (36) attached to the first shuttle (22), the plate (36) having a nose (37), wherein in the first position of the motor the nose (37) acts on the fourth lever (34) and wherein in the second and third position of the motor the nose (37) does not act on the fourth lever (34) so that a rotation of the fourth lever (34) results in a up or down movement of the front end of the first lever (16).

5. Gripper according to claim 2, further comprising a jam detector mechanism with a roller (42), wherein the roller (42) lies opposite to the second jaw (14).

## Patentansprüche

1. Greifer, umfassend:
einen ersten Hebel (16) mit einer ersten, an einem vorderen Ende des ersten Hebels (16) befestigten Klemmbacke (12),
einen zweiten Hebel (17) mit einer zweiten, an einem vorderen Ende des zweiten Hebels (17) befestigten Klemmbacke (13),
einen dritten Hebel (18) mit einer dritten, an einem vorderen Ende des dritten Hebels (18) befestigten Klemmbacke (14), wobei die erste Klemmbacke (12) und die zweite Klemmbacke (13) eine erste Klammer bilden and wobei die erste Klemmbacke (12) und die dritte Klemmbacke (14) eine zweite Klammer bilden,
einen Motor, und
Mittel um eine Drehbewegung des Motors in Drehbewegungen der drei Hebel umzuwandeln (16, 17, 18) derart, dass in einer ersten Position des Motors beide Klammern offen sind, dass in einer zweiten Position des Motors die erste Klammer geschlossen und die zweite Klammer offen ist und dass in einer dritten Position des Motors die erste Klammer offen und die zweite Klammer geschlossen ist.

2. Greifer, umfassend:
einen ersten Hebel (16) mit einer ersten, an einem vorderen Ende des ersten Hebels (16) befestigten Klemmbacke (12),
einen zweiten Hebel (17) mit einem an einem vorderen Ende des zweiten Hebels (17) befestigten Schieber (41),
einen dritten Hebel (18) mit einer zweiten, an einem vorderen Ende des dritten Hebels (18) befestigten Klemmbacke (14), wobei die erste Klemmbacke (12) und die zweite Klemmbacke (14) eine Klammer bilden,
einen Motor, und
Mittel um eine Drehbewegung des Motors in Drehbewegungen der drei Hebel (16, 17, 18) umzuwandeln derart, dass in einer ersten Position des Motors die Klammer offen und der Schieber (41) in einer angehobenen Position, dass in einer zweiten Position des Motors die Klammer geschlossen und der Schieber (41) in einer angehobenen Position und dass in einer dritten Position des Motors die Klammer offen und der Schieber (41) in einer abgesenkten Position ist.

3. Greifer nach Anspruch 1 oder 2, weiter umfassend:
ein erstes, an einem hinteren Ende des zweiten Hebels (17) befestigtes Kupplungsstück (20),
ein zweites, an einem hinteren Ende des dritten Hebels (18) befestigtes Kupplungsstück (21),
einen ersten Schlitten (22) mit einer ersten Zahnstange (24),
einen zweiten Schlitten (23) mit einer zweiten, auf in der z-Richtung verlaufenden Führungsschienen bewegbar gelagerten Zahnstange (25),
ein vom Motor angetriebenes Zahnrad (26), wobei die Zähne des Zahnrads (26) in die Zähne der Zahnstangen (24, 25) eingreifen,
eine erste Stange (28), die verschiebbar im ersten Schlitten (22) gelagert ist und gegen das erste Kupplungsstück (20) hervorsteht, und eine zweite Stange (29), die verschiebbar im zweiten Schlitten (23) gelagert ist und gegen das zweite Kupplungsstück (21) hervorsteht,
eine erste, über die erste Stange (28) gestülpte und zwischen dem ersten Schlitten (22) und einem ersten, an der ersten Stange (28) befestigten Anschlag (31) zusammengedrückte Feder (30), so dass die erste Feder (30) vorgespannt ist, und eine zweite, über die zweite Stange (29) gestülpte und zwischen dem zweiten Schlitten (23) und einem zweiten, an der zweiten Stange (29) befestigten Anschlag (33) zusammengedrückte Feder (32), so dass die zweite Feder (32) vorgespannt ist, wobei
in der zweiten Position des Motors die erste Stange (28) gegen das erste Kupplungsstück (20) drückt, während die zweite Stange (29) das zweite Kupplungsstück nicht berührt (21), und wobei in der dritten Position des Motors die erste Stange (28) das erste Kupplungsstück (20) nicht berührt während die zweite Stange (29) gegen das zweite Kupplungsstück (21) drückt.

4. Greifer nach Anspruch 3, weiter umfassend:
einen vierten Hebel (34),
einen fünften Hebel (39), wobei ein erstes Ende des fünften Hebels (39) an ein Ende des vierten Hebels (34) gekoppelt und ein zweites Ende des fünften Hebels (39) an das hintere Ende des ersten Hebels (16) gekoppelt ist, wobei das zweite Ende des fünften Hebels (39) und das hintere Ende des ersten Hebels (16) einander gegenüberliegende Oberflächen haben, die keilförmig sind, und
eine am ersten Schlitten (22) befestigte Platte (36) mit einem Ansatz (37), wobei der Ansatz (37) in der ersten Position des Motors auf den vierten Hebel (34) einwirkt und wobei der Ansatz (37) in der zweiten und dritten Position des Motors nicht auf den vierten Hebel (34) einwirkt, so dass eine Drehbewegung des vierten Hebels (34) eine auf oder ab Bewegung des vorderen Endes des ersten Hebels (16) ergibt.

5. Greifer nach Anspruch 2, weiter umfassend einen Stau-Detektionsmechanismus mit einer Rolle (42), wobei die Rolle (42) gegenüber der zweiten Klemmbacke (14) liegt.

## Revendications

1. Préhenseur, comportant :
un premier levier (16) muni d'une première mâchoire de serrage (12) fixée sur une extrémité avant du premier levier (16),
un second levier (17) muni d'une seconde mâchoire de serrage (13) fixée sur une extrémité avant du second levier (17),
un troisième levier (18) muni d'une troisième mâchoire de serrage (14) fixée sur une extrémité avant du troisième levier (18), dans lequel la première mâchoire de serrage (12) et la seconde mâchoire de serrage (13) forment une première pince et dans lequel la première mâchoire de serrage (12) et la troisième mâchoire de serrage (14) forment une seconde pince,
un moteur, et
des moyens pour transformer un mouvement de rotation du moteur dans des mouvements de rotation des trois leviers (16, 17, 18) de telle sorte que les deux pinces sont ouvertes dans une première position du moteur, et de telle sorte que la première pince est fermée et que la seconde pince est ouverte dans une seconde position du moteur, et de telle sorte que la première pince est ouverte et que la seconde pince est fermée dans une troisième position du moteur.

2. Préhenseur, comportant :
un premier levier (16) muni d'une première mâchoire de serrage (12) fixée sur une extrémité avant du premier levier (16),
un second levier (17) muni d'une targette (41) fixée sur une extrémité avant du second levier (17),
un troisième levier (18) muni d'une seconde mâchoire de serrage (14) fixée sur une extrémité avant du troisième levier (18), dans lequel la première mâchoire de serrage (12) et seconde mâchoire de serrage (14) forment une pince,
un moteur, et
des moyens pour transformer un mouvement de rotation du moteur dans des mouvements de rotation des trois leviers (16, 17, 18) de telle sorte que la pince est ouverte et que la targette (41) se trouve dans une position relevée dans une première position du moteur, de telle sorte que la pince est fermée et la targette (41) se trouve dans une position relevée dans seconde position du moteur et de telle sorte que la pince est ouverte et que la targette (41) se trouve dans une position abaissée dans une troisième position du moteur.

3. Préhenseur selon l'une ou l'autre des revendications 1 et 2, comportant en outre :
un premier élément de couplage (20) fixé sur une extrémité arrière du second levier (17),
un second élément de couplage (21) fixé sur une extrémité arrière du troisième levier (18),
un premier chariot (22) muni d'une première crémaillère (24),
un second chariot (23) muni d'une seconde crémaillère (25) montée avec possibilité de déplacement sur des rails de guidage qui s'étendent dans la direction z,
une roue dentée (26) entraînée par le moteur, dans laquelle les dents de la roue dentée (26) viennent s'engrener dans les dents des crémaillères (24, 25),
une première tige (28) qui est montée avec faculté de translation dans le premier chariot (22) et qui vient en saillie contre le premier élément de couplage (20), et une seconde tige (29) qui est montée avec faculté de translation dans le second chariot (23) et qui vient en saillie contre le second élément de couplage (21),
un premier ressort (30), emmanché sur la première tige (28) et comprimé entre le premier chariot (22) et une première butée (31) fixée sur la première tige (28), de telle sorte que le premier ressort (30) est précontraint, et un second ressort (32), emmanché sur la seconde tige (29) et comprimé entre le second chariot (23) et une seconde butée (33) fixée sur la seconde tige (29), de telle sorte que le second ressort (32) est précontraint, dans lequel
dans la seconde position du moteur, la première tige (28) vient s'appuyer contre le premier élément de couplage (20), tandis que la seconde tige (29) ne touche pas le second élément de couplage (21), et dans lequel, dans la troisième position du moteur, la première tige (28) ne touche pas le premier élément de couplage (20) tandis que la seconde tige (29) vient s'appuyer contre le second élément de couplage (21).

4. Préhenseur selon la revendication 3, comportant en outre :
un quatrième levier (34),
un cinquième levier (39), dans lequel une première extrémité du cinquième levier (39) est accouplée à une extrémité du quatrième levier (34) et dans lequel une seconde extrémité du cinquième levier (39) est accouplée à l'extrémité arrière du premier levier (16), dans lequel la seconde extrémité du cinquième levier (39) et l'extrémité arrière du premier levier (16) ont des surfaces qui sont placées l'une à l'opposé de l'autre et qui sont en forme de clavette, et
une plaquette (36) fixée sur le premier chariot (22) et munie d'un appendice (37), dans laquelle l'appendice (37) agit sur le quatrième levier (34) dans la première position du moteur et dans laquelle l'appendice (37) n'agit pas sur le quatrième levier (34) dans la seconde et dans la troisième position du moteur, de telle sorte qu'il résulte un mouvement vers le haut ou vers le bas de l'extrémité avant du premier levier (16) suite à un mouvement de rotation du quatrième levier (34).

5. Préhenseur selon la revendication 2, comportant en outre un mécanisme de détection d'une accumulation, lequel est muni d'un galet (42) et dans lequel le galet (42) se trouve à l'opposé de la seconde mâchoire de serrage (14).
